# EUROPÄISCHE PATENTSCHRIFT

(11) **EP 1 608 523 B1**
(45) Veröffentlichungstag und Bekanntmachung des Hinweises auf die Patenterteilung: **27.06.2012**
(21) Anmeldenummer: 04724277.1
(22) Anmeldetag: 30.03.2004
(51) Int. Cl.: B60J 5/04, B60R 13/00

(54) **KRAFTFAHRZEUGTÜR SOWIE MODULTÜRÄGER**
MOTOR VEHICLE DOOR AND MODULE SUPPORT
PORTE DE VEHICULE AUTOMOBILE ET SUPPORT MODULAIRE

(30) Priorität: 31.03.2003 DE 10315805
(43) Veröffentlichungstag der Anmeldung: 28.12.2005
(73) Patentinhaber: Faurecia Innenraumsysteme GmbH, 76767 Hagenbach (DE)
(72) Erfinder: HERMANN, Marko, 37269 Eschwege-Oberduenzebach (DE)
(74) Vertreter: Pfenning, Meinig & Partner GbR
(86) Internationale Anmeldenummer: PCT/EP2004/003381
(87) Internationale Veröffentlichungsnummer: WO 2004/087450

(56) Entgegenhaltungen:
- EP-A- 0 955 191
- EP-A- 1 090 788
- DE-A- 19 915 151
- DE-A- 19 944 916
- US-A- 5 367 832
- US-A- 6 161 337

## Beschreibung

Die vorliegende Erfindung betrifft eine Kraftfahrzeugtür sowie einen in dieser Kraftfahrzeugtür enthaltenden Modulträger nach den Ansprüchen 1 bzw. 15.

Kraftfahrzeugtüre, insbesondere schwenkbare Seitentüren enthalten regelmäßig eine verschiebbare Fensterscheibe, welche nach Anforderung der Fahrzeuginsassen geöffnet oder geschlossen werden kann. Außerdem enthalten moderne Kraftfahrzeugtüren oftmals einen sogenannten "Modulträger", auf welchem verschiedene Funktionselemente, wie etwa Lautsprechereinheiten, elektrische Steuerelemente zur Sitzverstellung oder Außenspiegeleinstellung etc. enthalten sind.

Insbesondere sind auf dem Modulträger Elemente untergebracht, mit welchen die Fensterscheibe (angetrieben von einem Seilzug) entlang einer auf dem Modulträger montierten Fensterheberschiene entlang verschoben werden kann. Hierzu sind üblicherweise am Türrahmen bzw. an der Fensterheberschiene Umlenkeinrichtungen mit Umlenkelementen für den Seilzug vorgesehen. Umlenkelemente in Form von auf Metallschienen genieteten Umlenkrollen sind z.B. bekannt.

Diese bekannten Kraftfahrzeugtüren weisen den Nachteil auf, dass sie in der Herstellung sehr aufwändig sind, da eine Fülle von Produktionsschritten nötig ist, außerdem ist aufgrund der Vielfältigkeit der verbauten Materialien der Materialeinsatz recht hoch und die Wiederverwendbarkeit zumindest erschwert.

Der vorliegenden Erfindung liegt daher die Aufgabe zugrunde, eine Kraftfahrzeugtür bzw. einen Modulträger für eine solche Kraftfahrzeugtür zu schaffen, welche kostengünstig herstellbar ist und einen einfachen Aufbau besitzt sowie eine gute Recyclebarkeit gewährleistet.

Die Aufgabe wird durch eine Kraftfahrzeugtür nach Anspruch 1 bzw. einen Modulträger nach 15 gelöst.

Dadurch, dass der Modulträger selbst Aufnahmen in Form von integrierten Tasten bzw. Absätzen enthält, an denen zu einer Umlenkeinrichtung gehörende Umlenkelemente zur Umlenkung linienförmiger Elemente befestigt sind, wird ein besonders einfacher Aufbau der Kraftfahrzeugtür möglich. Es ist nicht mehr notwendig, Fensterheberschienen vorzusehen, an welchen Umlenkrollen angenietet sind. Stattdessen können an praktisch beliebigen Stellen des Modulträgers Aufnahmen für Umlenkelemente vorgesehen sein, welche auf verschiedene Arten mit dem Modulträger verbunden sind. Diesen Umlenkelementen ist jeweils gemeinsam, dass sie linienförmige Elemente, wie etwa Seilzüge, umlenken können und nach Maßgabe einer Antriebsvorrichtung für diese linienförmigen Elemente das Öffnen und Schließen von Kraftfahrzeugscheiben ermöglichen.

Vorteile der erfindungsgemäßen Kraftfahrzeugtür bzw. des Modulträgers sind, dass es sich bei den hier gezeigten Umlenkelementen um kompakte vormontierte Einheiten handeln kann. Es handelt sich außerdem um Standardbaugruppen, welche für viele Türmodule (unabhängig vom Fahrzeugtyp) einsetzbar sind. Die Umlenkelemente bzw. die Baugruppe, welche die Umlenkelemente enthält, kann bereits in einem Fertigungsprozess mit dem Modulträger zusammen hergestellt werden. Es ist somit eine einfache und sichere Montage möglich. Im Folgenden wird kurz erklärt, wie ein "Aufnahmeblech", welches in Endform U-förmig ist, in mehreren Schritten erzeugt wird. Hierzu wird erstens ein entsprechender, flacher Blechstreifen gestanzt, dann in mehreren Schritten (je nach gewünschter Endform) nötige Einprägungen, Ausstanzungen und Formen eingearbeitet, anschließend die nötigen False und Umbördelungen angeprägt, dann die Umlenkrolle eingelegt (maschinell oder manuell), dann das vorgeprägte Blech mit eingelegter Rolle zur endgültigen U-Form zusammengebogen und somit das fertige "Einsatzteil" erhalten. Die Umlenkung mittels der erfindungsgemäßen Umlenkelemente kann grundsätzlich aus zwei verschiedenen Arten von lösbaren Steckteilen bestehen. Das erste Teil ist hierbei ein Gleitteil (als Einsatz und Gegenpart zum Fensterheber-Seil). Als zweites Teil ist das Umlenkteil (festes Teil oder Rolle möglich) vorgesehen, welches auf das Modul aufgesteckt wird. Das Gleitteil ist ein Auf- oder Einsatz (Blech/Kunststoff), der den Gegenpart zum Fensterheber-Seil oder auch zu einer Umlenkrolle darstellt (Gleitpart). Dabei kann das Gleitteil gleichzeitig die Sicherungsfunktion für das Umlenkteil sein (Formsicherung). Das Umlenkteil kann eine Rolle (selbstführende) sein, auf der Fensterheber-Seil läuft. Sicherung und ggf. Federung erfolgen dabei über das eingesetzte Gleitteil. Ebenfalls kann ein statisches (festes)Umlenkstück sein, das durch Formgebung federnd ausgeführt ist und von dem entsprechenden Gleitteil gesichert wird. Aufnahmen für Teil 1 und 2 sind in das Modul integriert (angespritzt) und leitet die Fensterheber-Kräfte ein. Unterstützend kann das Türblech angebunden werden (über Anschraubpunkte). Bei Zusammenbau wird das Gleit um/auf das Umlenkstück gesteckt/geklipst und zusammen in die Aufnahme gesteckt/geklipst. Dabei ist die Steckverbindung formschlüssig und hat Sicherungsfunktion. Bei Überstand durch Umlenkpunkte wird ggf. eine Verlängerung des Umlenkteils nötig. Vorteile sind also die Integration auf einem Kunststoffmodulträger. Die Montage erfolgt als "Steckmontage", kein Schrauben, einfacheres tooling ist gegeben. Somit können Teile montagesicher ausgeführt werden, es ergeben sich günstige Herstellungskosten und gleichartige Materialien.

Vorteilhafte Weiterbildungen der vorliegenden Erfindung werden in den abhängigen Ansprüchen angegeben.

Prinzipiell gibt es zwei sehr vorteilhafte Ausführungsformen erfindungsgemäßer Umlenkeinrichtungen. Bei der ersten Ausführungsform handelt es sich vorzugsweise um Rollen, welche in taschenförmigen Aufnahmen des Modulträgers selbst untergebracht sind. Bei der zweiten Ausführungsform handelt es sich um Umlenkblöcke, welche vorzugsweise translatorisch federnd in Aufnahmen des Modulträgers untergebracht sind.

In der ersten Ausführungsform ist das Umlenkelement vorzugsweise als Rolle vorgesehen. Eine drehbare Rolle hat hierbei den Vorteil, dass aufgrund der Drehbarkeit der Rolle keine besonders glatte Oberfläche der Umlenkrolle bzw. des damit in Verbindung stehenden linienförmigen Elements sichergestellt sein muss. Die Rolle kann insbesondere aus POM (Polyoxymethylean) oder aus einem Metall (Aluminiumdruckguss etc.) hergestellt sein.

Eine besonders vorteilhafte Weiterbildung dieser ersten Ausführungsform sieht vor, dass die Rolle in einer vorzugsweise taschenartigen Aufnahme gehalten ist, wobei ein Halteteil zum Lagern der Rolle zwischen den Innenwänden der Aufnahme und Rolle vorgesehen ist. Durch dieses Halteteil wird ein passender Sitz der Rolle gewährleistet, ohne dass aufwendige Achsbohrungen in dem Modulträger notwendig sind. Das Halteteil ist hierbei vorzugsweise im Wesentlichen "U-förmig" ausgestaltet. Hierbei weisen die Schenkel des "U" vorzugsweise nach innen hin Einbuchtungen auf, welche so ausgeformt sind, dass diese eine gemeinsame Achse für die Rolle bilden. Hierbei ist es z.B. möglich, dass diese Einbuchtungen sich überschneiden, etwa indem eine Einbuchtung in eine komplementäre Öffnung der entgegenstehenden Einbuchtung hineindrückt.

Das Halteteil kann hierbei auch an der Unterseite des "U" Einbuchtungen zum Unterstützen einer Lauffläche der Rolle aufweisen. Hierbei wird neben der zur Verfügungstellung eines weiteren Auflagepunktes auch eine "federnde" Lagerung ermöglicht. Es ist auf diese Weise möglich, auf Bodenzug-Federelemente zu verzichten und trotzdem eine federnde Lagerung des Seilzugmechanismus zu erreichen, dies ist insbesondere in Bezug auf Klapperfreiheit/Temperaturausdehnungen der beteiligten Elemente wichtig.

Außerdem kann vorgesehen sein, dass an den Schenkelenden des "U" des Halteteils Verformungen zum Einklipsen und/oder Umfassen von Wänden der Aufnahme gegeben sind, so dass auf diese Weise eine einfache Montage möglich ist.

Es bietet sich insbesondere an, dass das Halteteil aus einem Metallblech, vorzugsweise Federblech gearbeitet ist (z.B. Federstahl DIN 1.1274 - Federblech).

Die zweite Ausführungsform der Erfindung sieht vor, dass das Umlenkelement als Umlenkblock gearbeitet ist, welcher nicht drehbar gelagert ist. Dieser Umlenkblock kann vorzugsweise aus POM oder Metall sein. Es bietet sich insbesondere an, dass er mit einer reibungsvermindernden Beschichtung überzogen ist, so dass die Reibung zu dem darüber geführten linienförmigen Element minimiert wird.

Eine besonders vorteilhafte Weiterbildung sieht vor, dass der Umlenkblock translatorisch gefedert ist. Hierbei kann zur Federung eine separate Feder, vorzugsweise aus Metall oder Kunststoff vorgesehen sein oder eine zu dem Umlenkblock integrale Feder. Hierbei kann der Umlenkblock aus dem Lagerwerkstoff IGLIDUR (eingetragene Marke des Unternehmens IGUS) hergestellt sein.

Der Umlenkblock ist vorzugsweise in der Aufnahme des Modulträger linear geführt, wobei die Aufnahme einen Anschlag zur Begrenzung des Translationsweges des Umlenkelementes aufweist. Hierbei ist es wiederum möglich, auf Federelemente in den linienförmigen Elementen zu verzichten.

Bezüglich des Modulträger ergeben sich vorteilhafte Weiterbildungen, welche für beide oben genannten Ausführungsformen gelten. So kann der Modulträger aus einfach recyclebaren und kostengünstigen Kunststoffen wie Polypropylen gefertigt sein. Es bietet sich hier insbesondere an, mit Landfasern vermischtes Polypropylenmaterial vorzusehen, etwa PP30LGF. Selbstverständlich ist es auch möglich, aus Metall gefertigte Trägermodule vorzusehen.

Die Aufnahmen für die Umlenkelemente können hier prinzipiell als Taschen und/oder Absätze ausgestaltet sein. Diese Aufnahmen sind vorteilhafterweise integraler Bestandteil des Modulträgers, d.h. sie werden mit diesem zusammen geformt, etwa in einem Kunststoffspritzgussverfahren (bei Kunststoff-Modulträgern) oder in einem Metallumformverfahren (bei metallenen Modulträgern). Es ist jedoch auch möglich, diese Aufnahmen anzuspritzen, anzukleben oder anzuschrauben.

Zur Steigerung der Stabilität können diese Aufnahmen zusätzlich an einem Türrahmen und/oder an einem Innenblech der Tür befestigt sein.

Eine vorteilhafte Weiterbildung sieht vor, dass der Modulträger keine Fensterheberschiene aufweist. Hierdurch wird das Gewicht der Kraftfahrzeugtür entscheidend verringert. Zum Ausgleich hierfür kann ein Gleitabschnitt um Modulträger vorgesehen sein zur Stützung bzw. Führung der Scheibe. Es hat sich überraschenderweise gezeigt, dass selbst bei den hohen Belastungen eines "Einbruchstestes" auf eine Fensterscheibe die Stabilität eines herkömmlichen Modulträgers auch ohne Unterstützung einer Fensterheberschiene ausreichend ist.

Weitere vorteilhafte Weiterbildungen der vorliegenden Erfindung werden in den übrigen abhängigen Ansprüchen angegeben.

Die Erfindung wird nun anhand mehrerer Figuren,erläutert. Es zeigen:
- Fig. 1: einen Querschnitt durch eine erfindungsgemäße Kraftfahrzeugtür,
- Fig. 2: einen Querschnitt durch eine taschenförmige Aufnahme mit einer Rolle als Umlenkelement gemäß einer ersten Ausführungsform der Erfindung,
- Fig. 3: ein als Umlenkblock gestaltetes Umlenkelement gemäß der zweiten Ausführungsform der Erfindung.

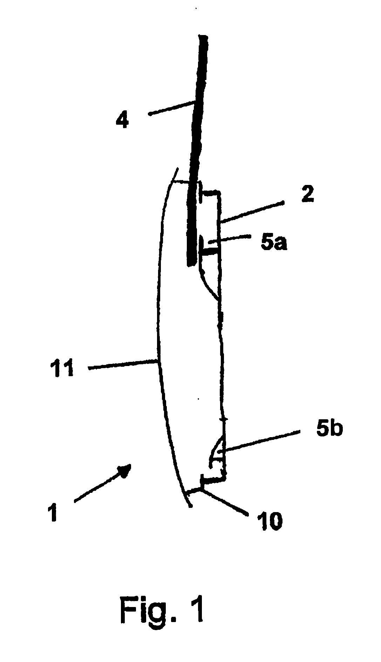

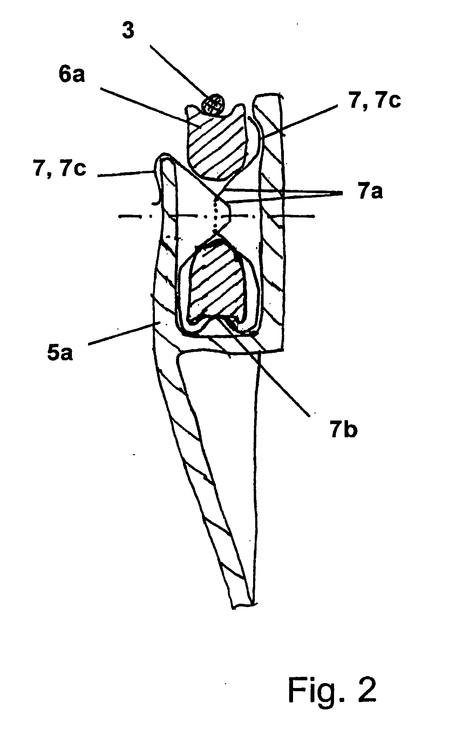

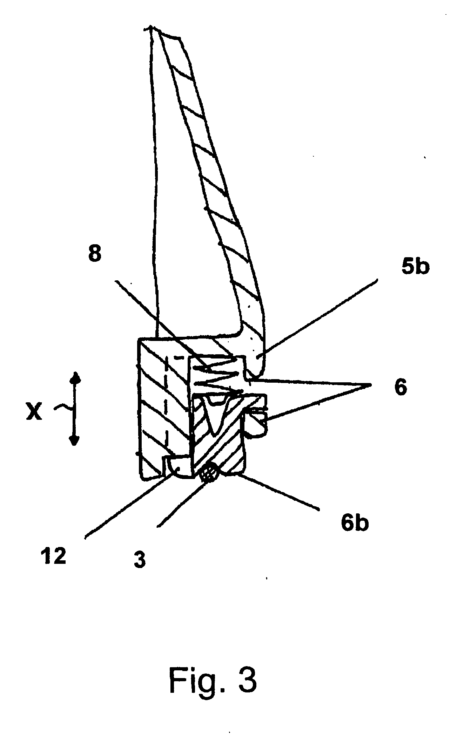

Fig. 1 zeigt eine Kraftfahrzeugtür 1. Diese weist ein Außenblech 11 sowie ein damit verbundenes Innenblech 10 auf. Ein Modulträger 2 ist vorgesehen, welcher Innenflächen der Tür bzw. des Innenbleches verschließt. Im Türinnenraum ist eine Scheibe 4 geführt. Diese Scheibe ist auf einem nicht näher gekennzeichneten Gleitabschnitt im Modulträger gleitend geführt, so dass auf eine Fensterheberschiene verzichtet werden kann. Die Scheibe 4 ist über nicht näher dargestellte linienförmige Elemente in Form von Seilzügen (s. hierzu Fign. 2 und 3) geführt. Diese Seilzüge wirken mit einer nicht dargestellten Antriebseinrichtung (mechanisch oder elektrisch betrieben) zusammen.

Die Seilzüge werden von einer Umlenkeinrichtung umgelenkt. Somit ist gewährleistet, dass auf das zwischen den beiden Enden der Seilzüge, d.h. einem Haltepunkt an der Scheibe 4 sowie dem Antrieb für den Seilzug, eine ausreichende Führung des Seilzugs erfolgt. Hierzu weist der Modulträger 2 Aufnahmen 5a und 5b auf in Form von Absätzen und/oder Taschen, an denen zu der Umlenkeinrichtung gehörende Umlenkelemente 6a, 6b zur Umlenkung linienförmiger Elemente, wie hier dem Seilzug, befestigt sind.

Die Aufnahme 5a entspricht hierbei einer ersten Ausführungsform der Erfindung, die Aufnahme 5b einer zweiten Ausführungsform der Erfindung.

Zunächst wird mit Bezug auf Fig. 2 näher auf die erste Ausführungsform der Erfindung eingegangen.

Fig. 2 zeigt eine vergrößerte Version einer Aufnahme 5a, wie sie in Fig. 1 angedeutet ist. Hierbei ist eine im Wesentlichen "U-förmige", also taschenförmige, Aufnahme 5a gezeigt. In dieser taschenförmigen Aufnahme ist ein Umlenkelement in Form einer Rolle 6a drehbar gelagert. Die Rolle ist aus POM gefertigt.

Die Rolle ist in der Tasche 5a gehalten, wobei ein Halteteil 7 zum Lagern der Rolle zwischen den Innenwänden der Aufnahme und der Rolle vorgesehen ist.

Das linienförmige Element in Form eines Seilzuges 3 wird über die Rolle 6a umgelenkt.

Hierbei ist das Halteteil 7, was vorliegend im Wesentlichen "U-förmig" ausgestaltet ist, besonders bemerkenswert. Das Halteteil 7 ist aus einem Metallblech, vorliegend Federblech gefertigt. Es weist an den Schenkeln des "U" Einbuchtungen 7a auf. Diese sind im Wesentlichen kegelstumpfförmig ausgebildet. die linke Einbuchtung dringt hierbei in die rechte Einbuchtung ein, so dass insgesamt eine Achse zur Lagerung der Rolle 6a entsteht.

An der Unterseite ist eine weitere Einbuchtung 7b zu sehen, welche mit der Lauffläche der Rolle 6a in Berührung stehen kann. Hierdurch wird eine federnde Lagerung der Rolle 6a ermöglicht. Schließlich sind die Enden der Schenkel zur Fixierung des Halteteils 7 ausgebildet. Der in Fig. 2 linke Schenkel ist hierbei umgebogen und hintergreift eine freistehende Wand der taschenförmigen Aufnahme 5a. Das Ende des rechten Schenkels hintergreift einen Vorsprung einer Wand des Modulträgers, so dass in der in Fig. 2 gezeigten Lage das Halteteil 7 als "eingeschnappt" zu betrachten ist.

Die Montage der in Fig. 2 gezeigten Umlenkeinrichtung erfolgt dadurch, dass die Rolle 6a auf eine Einbuchtung 7a gelegt wird und anschließend die Einbuchtungen aufeinander zu bewegt werden (so dass sich annähernd eine "U"-Form ergibt) und anschließend beide Teile zusammen in die taschenförmige Aufnahme 5a gesteckt werden, wo das Halteteil 7 sich unter Druck seiner Schenkel nach außen, d.h. gegen die Wände der taschenartigen Aufnahme 5a pressen und somit die Rolle 6a fixieren.

Fig. 3 zeigt eine weitere Ausführungsform der Erfindung. Hierbei ist ein Umlenkblock 6b gezeigt, welcher in einer absatzförmigen Aufnahme 5b untergebracht ist. Das Umlenkelement in Form des Umlenkblockes 6b ist hierbei in der Raumrichtung x translatorisch gefedert geführt. Hierzu ist eine Feder 8 vorgesehen, welche zwischen Umlenkblock 6b und der Unterseite der Aufnahme 5b unter Vorspannung eingelegt ist. Eine Nase des Umlenkblockes 6b wirkt mit Anschlägen 9 zusammen, um so den Translationsweg des Umlenkblockes 6b zu begrenzen. Der Umlenkblock hat außerdem noch eine herausstehende Wand 12, welcher in einer durch Schraffur angedeuteten Ausnehmung des Modulträgers translatorisch gleitend geführt ist. Der Umlenkblock ist aus POM gefertigt und weist an seiner Oberseite eine reibungsvermindernde Beschichtung auf, zum Beispiel aus Teflon® oder auch eine einfache Schmierung).

Die hier gezeigte Variante des gefederten Umlenkblockes ist insbesondere günstig, um platzsparend eine Umlenkung eines linienförmigen Elementes vorzusehen.

Zusammenfassend wird darauf hingewiesen, dass erste und zweite Ausführungsform, sowohl für sich genommen als auch im Zusammenspiel in einer erfindungsgemäßen Kraftfahrzeugtür vorkommen sollen. Wichtig ist hierbei, dass die gezeigten Elemente als integraler Teil eines Modulträgers vorgefertigt werden können.

Es ist besonders kostengünstig, den erfindungsgemäßen Modulträger aus einem recyclingfähigen und kostengünstigen Kunststoff herzustellen. Der in den Fign. 1 bis 3 gezeigte Modulträger besteht aus mit Langfasern versetztem Polypropylen (PP30LGF).

## Patentansprüche

1. Kraftfahrzeugtür (1), enthaltend einen Modulträger (2) zum Schließen von Innenflächen der Tür sowie eine durch linienförmige Elemente wie Seilzüge (3) oder dergleichen bewegliche Scheibe (4) und eine Umlenkeinrichtung für diese linienförmigen Elemente, wobei der Modulträger (2) Aufnahmen (5a, 5b) in Form von Absätzen und/oder Taschen enthält, an denen zur Umlenkeinrichtung gehörende Umlenkelemente (6a, 6b) zur Umlenkung linienförmiger Elemente befestigt sind,
**dadurch gekennzeichnet,**
**dass** die Umlenkelemente (6a, 6b) als Umlenkblock (6b) in der Aufnahme federnd ausgeführt sind und/oder die Umlenkelemente (6a, 6b) als Rolle (6a) ausgebildet sind und in Aufnahmen (5a) gehalten sind, wobei ein im Wesentlichen "U-förmiges" Halteteil (7) vorhanden ist, und die Schenkel des "U" nach innen hin Einbuchtungen (7a) aufweisen, welche so ausgeformt sind, dass diese gemeinsam eine Achse für die Rolle (6a) bilden.

2. Kraftfahrzeugtür (1) nach Anspruch 1, **dadurch gekennzeichnet, dass** das im Wesentlichen "U-förmige" Halteteil (7) an der Unterseite des "U" Einbuchtungen (7b) zum Unterstützen einer Lauffläche der Rolle (6a) aufweist.

3. Kraftfahrzeugtür (1) nach Anspruch 1 oder Anspruch 2, **dadurch gekennzeichnet, dass** das Halteteil (7) "U-förmig" ist und an den Schenkelenden Verformungen (7c) zum Einklipsen und/oder Umfassen von Wänden der Aufnahme aufweist.

4. Kraftfahrzeugtür (1) nach einem der vorhergehenden Ansprüche, **dadurch gekennzeichnet, dass** die Rolle (6a) aus POM oder Metall ist.

5. Kraftfahrzeugtür (1) nach einem der vorhergehenden Ansprüche, **dadurch gekennzeichnet, dass** das Halteteil (7) aus Metallblech ist.

6. Kraftfahrzeugtür (1) nach einem der vorhergehenden Ansprüche, **dadurch gekennzeichnet, dass** das Umlenkelement (6b) an seiner zu dem linienförmigen Element hin gerichteten Oberfläche reibungsvermindernd beschichtet ist.

7. Kraftfahrzeugtür (1) nach einem der vorhergehenden Ansprüche, **dadurch gekennzeichnet, dass** der Umlenkblock (6b) translatorisch gefedert ist.

8. Kraftfahrzeugtür (1) nach Anspruch 7, **dadurch gekennzeichnet, dass** die translatorische Federung durch eine separate Feder (8) oder durch eine zu dem Umlenkblock (6b) gehörende Feder gebildet ist.

9. Kraftfahrzeugtür (1) nach einem der Ansprüche 7 oder 8, **dadurch gekennzeichnet, dass** der Umlenkblock (6b) in der Aufnahme (5b) linear geführt ist und die Aufnahme einen Anschlag (9) zur Begrenzung des Translationsweges des Umlenkelementes aufweist.

10. Kraftfahrzeugtür (1) nach einem der vorhergehenden Ansprüche, **dadurch gekennzeichnet, dass** der Umlenkblock (6b) aus POM ist.

11. Kraftfahrzeugtür (1) nach einem der vorhergehenden Ansprüche, **dadurch gekennzeichnet, dass** der Modulträger (2) aus Polypropylen ist bzw. Polypropylen enthält.

12. Kraftfahrzeugtür (1) nach einem der vorhergehenden Ansprüche, **dadurch gekennzeichnet, dass** die Aufnahmen (5a, 5b) an den Modulträger (2) angespritzt, angeklebt oder angeschraubt sind oder ein integraler Bestandteil des Modulträgers (2) sind.

13. Kraftfahrzeugtür (1) nach einem der vorhergehenden Ansprüche, **dadurch gekennzeichnet, dass** die Aufnahmen (5a, 5b) zusätzlich am Türrahmen und/oder an einem Innenblech (10) der Tür befestigt sind.

14. Kraftfahrzeugtür (1) nach einem der vorhergehenden Ansprüche, **dadurch gekennzeichnet, dass** der Modulträger (2) eine oder keine Fensterheberschiene aufweist und/oder ein Gleitabschnitt im Modulträger (2) vorgesehen ist zur Stützung der Scheibe (4).

15. Modulträger (2), zum Schließen von Innenflächen einer Kraftfahrzeugtür, mit einer Umlenkeinrichtung für linienförmige Elemente wie Seilzüge (3) oder dergleichen, wobei der Modulträger (2) Aufnahmen (5a, 5b) in Form von Absätzen und/oder Taschen enthält, an denen zur Umlenkeinrichtung gehörende Umlenkelemente (6a, 6b) zur Umlenkung linienförmiger Elemente befestigbar sind,
**dadurch gekennzeichnet,**
**dass** die Umlenkelemente (6a, 6b) als Umlenkblock (6b) in der Aufnahme federnd ausgeführt sind und/oder die Umlenkelemente (6a, 6b) als Rolle (6a) ausgebildet sind und in Aufnahmen (5a) gehalten sind, wobei ein im Wesentlichen "U-förmiges" Halteteil (7) vorhanden ist, und die Schenkel des "U" nach innen hin Einbuchtungen (7a) aufweisen, welche so ausgeformt sind, dass diese gemeinsam eine Achse für die Rolle (6a) bilden, wobei
die Aufnahmen (5a, 5b) an den Modulträger angespritzt, angeklebt oder angeschraubt sind oder ein integraler Bestandteil des Modulträgers sind.

16. Modulträger (2) nach Anspruch 15, **dadurch gekennzeichnet, dass** er eine oder keine Fensterheberschiene aufweist und/oder ein Gleitabschnitt im Modulträger (2) vorgesehen ist zur Stützung einer Scheibe (4).

17. Modulträger (2) nach Anspruch 15 oder Anspruch 16, **dadurch gekennzeichnet, dass** der Modulträger (2) aus Polypropylen ist bzw. Polypropylen enthält.

## Claims

1. A motor vehicle door (1), including a module carrier (2) for closing inner surfaces of the door as well as a pane (4) which is movable by means of linear elements such as cable controls (3) or similar and a deflection device for these linear elements, wherein the module carrier (2) includes receivers (5a, 5b) in the form of recesses and/or pockets at which deflection elements (6a, 6b) belonging to the deflection device are fastened for deflecting linear elements,
**characterised in that**
the deflection elements (6a, 6b) are resiliently designed as a deflection block (6b) in the receiver and/or the deflection elements (6a, 6b) are formed as a roller (6a) and are held in receivers (5a), with a substantially "U-shaped" holding part (7) being present and the limbs of the "U" having indentations (7a) towards the inside which are shaped so that they form an axis for the roller (6a) together.

2. A motor vehicle door (1) in accordance with claim 1, **characterised in that** the substantially "U-shaped" holding part (7) has indentations (7b) at the lower side of the "U" for supporting a running surface of the roller (6a).

3. A motor vehicle door (1) in accordance with claim 1 or claim 2, **characterised in that** the holding part (7) is "U-shaped" and has deformations (7c) at the limb ends for clipping on and/or engaging around walls of the receiver.

4. A motor vehicle door (1) in accordance with one of the preceding claims, **characterised in that** the roller (6a) is made from POM or metal.

5. A motor vehicle door (1) in accordance with one of the preceding claims, **characterised in that** the holding part (7) is made from sheet metal.

6. A motor vehicle door (1) in accordance with one of the preceding claims, **characterised in that** the deflection element (6b) is coated in a friction-reducing manner at its surface directed toward the linear element.

7. A motor vehicle door (1) in accordance with one of the preceding claims, **characterised in that** the deflection block (6b) has translatory cushioning.

8. A motor vehicle door (1) in accordance with claim 7, **characterised in that** the translatory cushioning is formed by a separate spring (8) or by a spring belonging to the deflection block (6b).

9. A motor vehicle door (1) in accordance with claim 7 or claim 8, **characterised in that** the deflection block (6b) is guided linearly in the receiver (5b) and the receiver has an abutment (9) for bounding the translation path of the deflection element.

10. A motor vehicle door (1) in accordance with one of the preceding claims, **characterised in that** the deflection block (6b) is made from POM.

11. A motor vehicle door (1) in accordance with one of the preceding claims, **characterised in that** the module carrier (2) is made from polypropylene or comprises polypropylene.

12. A motor vehicle door (1) in accordance with one of the preceding claims, **characterised in that** the receivers (5a, 5b) are injection moulded, adhesively bonded or screwed to the module carrier (2) or are an integral component of the module carrier (2).

13. A motor vehicle door (1) in accordance with one of the preceding claims, **characterised in that** the receivers (5a, 5b) are additionally fastened to the door frame and/or to an inner panel (10) of the door.

14. A motor vehicle door (1) in accordance with one of the preceding claims, **characterised in that** the module carrier (2) has one window winder rail or no window winder rail and/or a sliding section is provided in the module carrier (2) for supporting the pane (4).

15. A module carrier (2), for closing inner surfaces of a motor vehicle door, having a deflection device for linear elements such as cable controls (3) or similar, wherein the module carrier (2) includes receivers (5a, 5b) in the form of recesses and/or pockets at which deflection elements (6a, 6b) belonging to the deflection device can be fastened for deflecting linear elements,
**characterised in that**
the deflection elements (6a, 6b) are designed resiliently in the receiver as a deflection block (6b) and/or the deflection elements (6a, 6b) are made as a roller (6a) and are held in receivers (5a), with a substantially "U-shaped" holding part (7) being present and the limbs of the "U" having indentations (7a) towards the inside which are shaped so that they form an axis for the roller (6a) together, with the receivers (5a, 5b) being injection moulded, adhesively bonded or screwed to the modular carrier or being an integral component of the module carrier.

16. A module carrier (2) in accordance with claim 15, **characterised in that** it has one window winder rail or no window winder rail and/or a sliding section is provided in the module carrier (2) for supporting a pane (4).

17. A module carrier (2) in accordance with claim 15 or claim 16, **characterised in that** the module carrier (2) is made from polypropylene or comprises polypropylene.

## Revendications

1. Porte de véhicule (1) incluant un support de module (2) permettant de fermer des surfaces intérieures de la porte ainsi qu'une vitre (4) pouvant être mue par des éléments linéaires comme un câble de commande (3) ou autre élément semblable, et un dispositif de déviation pour ces éléments linéaires, où le support de module (2) comporte des logements de fixation (5a, 5b) en forme de talon et / ou de poche, auxquels sont fixés des éléments déviateurs (6a, 6b) appartenant au dispositif de déviation, destinés à dévier les éléments linéaires,
**caractérisée en ce que** les éléments déviateurs (6a, 6b) sont montés en tant que bloc de déviation (6b) dans le logement, et ce avec un amortissement, et / ou que les éléments déviateurs (6a, 6b) sont constitués en forme de rouleau (6a) et maintenus dans des logements (5a), où se trouve un élément de guidage (7) pour l'essentiel en forme de « U », et où les pattes du « U » présentent des bosselures (7a) tournées vers l'intérieur, formées de telle façon qu'elles constituent ensemble un axe pour le rouleau (6a).

2. Porte de véhicule (1) selon la revendication 1, **caractérisée en ce que** l'élément de guidage (7) pour l'essentiel en forme de « U » présente sur la partie inférieure du « U » des bosselures (7b) en vue de soutenir une bande de roulement du rouleau (6a).

3. Porte de véhicule (1) selon la revendication 1 ou la revendication 2, **caractérisée en ce que** l'élément de guidage (7) est en forme de « U » et présente à l'extrémité des pattes du « U » des déformations (7c) permettant de les clipser ou de les poser en enveloppement sur les parois du logement.

4. Porte de véhicule (1) selon l'une des revendications précédentes, **caractérisée en ce que** le rouleau (6a) est en POM (polyoxyméthylène) ou en métal.

5. Porte de véhicule (1) selon l'une des revendications précédentes, **caractérisée en ce que** l'élément de guidage (7) est en tôle métallique.

6. Porte de véhicule (1) selon l'une des revendications précédentes, **caractérisée en ce que** l'élément déviateur (6b) est revêtu d'un film réducteur de frottement sur sa surface tournée vers l'élément linéaire.

7. Porte de véhicule (1) selon l'une des revendications précédentes, **caractérisée en ce que** le bloc de déviation (6b) est amorti en translation.

8. Porte de véhicule (1) selon la revendication 7, **caractérisée en ce que** l'amortissement en translation est réalisé grâce à un ressort séparé (8) ou bien grâce à un ressort appartenant au bloc de déviation (6b) lui-même.

9. Porte de véhicule (1) selon l'une des revendications 7 ou 8, **caractérisée en ce que** le bloc de déviation (6b) est guidé selon une translation linéaire dans le logement (5b) et que le logement présente une butée (9) en vue de limiter le parcours en translation de l'élément de déviation.

10. Porte de véhicule (1) selon l'une des revendications précédentes, **caractérisée en ce que** le bloc de déviation (6b) est en POM.

11. Porte de véhicule (1) selon l'une des revendications précédentes, **caractérisée en ce que** le support de module (2) est fait de polypropylène ou bien contient du polypropylène.

12. Porte de véhicule (1) selon l'une des revendications précédentes, **caractérisée en ce que** les logements (5a, 5b) sont fixés par injection, collés ou vissés au support de module (2), ou bien font partie intégrante du support de module (2).

13. Porte de véhicule (1) selon l'une des revendications précédentes, **caractérisée en ce que** les logements (5a, 5b) sont en outre fixés au cadre de la porte et / ou à une tôle interne à la porte (10).

14. Porte de véhicule (1) selon l'une des revendications précédentes, **caractérisée en ce que** le support de module (2) présente un rail de guidage de lève-vitre ou bien n'en présente pas, et / ou qu'une section de glissement est prévue dans le support de module (2) pour soutenir une vitre.

15. Support de module (2) permettant de fermer des surfaces intérieures d'une porte de véhicule (1), avec un dispositif de déviation pour des éléments linéaires comme un câble de commande (3) ou autre élément semblable, où le support de module (2) comporte des logements de fixation (5a, 5b) en forme de talon et / ou de poche, auxquels des éléments déviateurs (6a, 6b) appartenant au dispositif de déviation et destinés à dévier les éléments linéaires peuvent être fixés,
**caractérisé en ce que** les éléments déviateurs (6a, 6b) sont montés en tant que bloc de déviation (6b) dans le logement, et ce avec un amortissement, et / ou que les éléments déviateurs (6a, 6b) sont constitués en forme de rouleau (6a) et maintenus dans des logements (5a), où se trouve un élément de guidage (7) pour l'essentiel en forme de « U », et où les pattes du « U » présentent des bosselures (7a) tournées vers l'intérieur, formées de telle façon qu'elles constituent ensemble un axe pour le rouleau (6a), où les logements (5a, 5b) sont fixés par injection, collés ou vissés au support de module, ou bien font partie intégrante du support de module.

16. Support de module (2) selon la revendication 15 **caractérisé en ce qu'**il présente un rail de guidage de lève-vitre ou bien n'en présente pas, et / ou qu'une section de glissement est prévue dans le support de module (2) pour soutenir une vitre (4).

17. Support de module (2) selon la revendication 15 ou la revendication 16, **caractérisée en ce que** le support de module (2) est fait de polypropylène ou bien contient du polypropylène.
